# EUROPEAN PATENT SPECIFICATION

(11) **EP 1 927 975 B1**
(45) Date of publication and mention of the grant of the patent: **27.01.2016**
(21) Application number: 07012092.8
(22) Date of filing: 20.06.2007
(51) Int. Cl.: G09G 3/36

(54) **Method of driving liquid crystal display device**
Verfahren zum Ansteuern einer Flüssigkristallanzeigevorrichtung
Procédé de commande de dispositif d'affichage à cristaux liquides

(30) Priority: 16.10.2006 KR 20060100362
(43) Date of publication of application: 04.06.2008
(73) Proprietor: LG Display Co., Ltd., Yeongdeungpo-gu Seoul 150-721 (KR)
(72) Inventor: Min, Woong-Ki, Daegu 702-250 (KR); Song, Hong-Sung, Gyeongsangbuk-Do 730-300 (KR)
(74) Representative: Ter Meer Steinmeister & Partner

(56) References cited:
- US-A- 6 046 717
- US-A1- 2005 264 508

## Description

### BACKGROUND

### 1. Priority Claim.

This application claims the benefit of priority from Korean Patent Application No. 2006-0100362, filed on October 16, 2006

### 2. Technical Field

The present invention relates to a liquid crystal display device, and in particular, to a method of driving a liquid crystal display device.

### 3. Related Art

Some display devices use cathode-ray tubes (CRTs). Other display devices may be flat panel displays, such as liquid crystal display (LCD) devices, plasma display panels (PDPs), field emission displays (FED), and electro-luminescence displays (ELDs). Some of these flat panel displays may be driven by an active matrix driving method in which a plurality of pixels arranged in a matrix configuration are driven using a plurality of thin film transistors. Among these active matrix type flat panel displays, liquid crystal display (LCD) devices and electroluminescent display (ELD) devices may exhibits a higher resolution, and increased ability to display colors and moving images as compared to some of the other flat panel display devices.

A LCD device may include two substrates that are spaced apart and face each other with a layer of liquid crystal molecules interposed between the two substrates. The two substrates may include electrodes that face each other. A voltage applied between the electrodes may induce an electric field across the layer of liquid crystal molecules. The alignment of the liquid crystal molecules may be changed based on an intensity of the induced electric field, thereby changing the light transmissivity of the LCD device. Thus, the LCD device may display images by varying the intensity of the electric field across the layer of liquid crystal molecules.

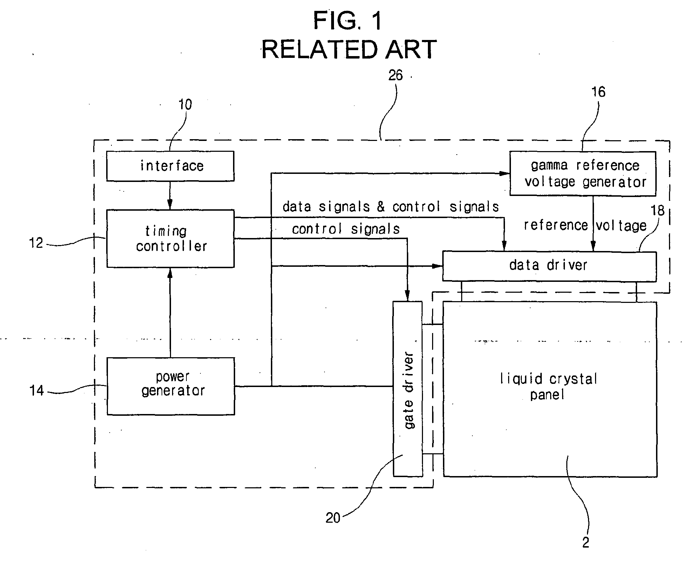

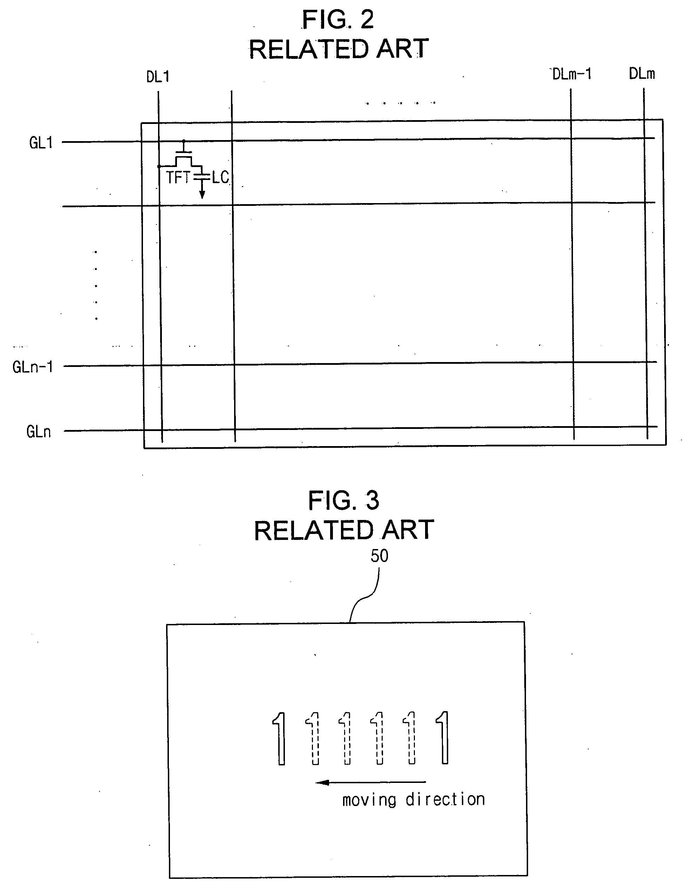

FIG. 1 is a block diagram of a LCD device according to the related art, and FIG. 2 is a circuit diagram of a liquid crystal panel of FIG. 1.

Referring to FIGs. 1 and 2, the LCD device includes a liquid crystal panel 2 and a driving circuit 26. The driving circuit 26 may include gate and data drivers 20 and 18, a timing controller 12, a gamma reference voltage generator 16, an interface 10 and a power generator 14.

Referring to FIG. 2, the liquid crystal panel 2 includes a plurality of pixels. The plurality of pixels are connected to a plurality of gate lines GL1 to GLn along a first direction and a plurality of data lines DL1 to DLm along a second direction. Each pixel includes a thin film transistor TFT and a liquid crystal capacitor LC. The liquid crystal capacitor LC includes a pixel electrode connected to the thin film transistor TFT, a common electrode, and a liquid crystal layer between the pixel and common electrodes. The common electrode is supplied with a common voltage.

The interface 10 is supplied with data signals and control signals such as a vertical synchronization signal, a horizontal synchronization signal, a data enable signal, and a data clock signal. The data signals and control signals are supplied from an external system, such as a computer system.

The timing controller 12 is supplied with the control signals from the interface 10 and generates control signals to control the gate and data drivers 20 and 18. The timing controller 12 processes data signals and supplies those to the data driver 18. The gate driver 20 is supplied with the control signals from the timing controller 12 to sequentially output gate voltages to the gate lines GL1 to GLn. The gate lines GL1 to GLn are sequentially enabled, and the thin film transistors TFT connected to the enabled gate line GL1 to GLn are turned on. The data driver 18 is supplied with the data signals and the control signals from the timing controller 12. The data driver 18 outputs data voltages to the data lines DL1 to DLm when the gate line GL1 to GLn is enabled. A gamma reference voltage generator 16 generates gamma reference voltages which are supplied to the data driver 18. The power generator 14 supplies voltages that operate the components of the LCD device.

An inversion method may be used to operate the LCD device. In the inversion method, the data voltages alternately have opposite polarities every predetermined pixel and every predetermined frame. Accordingly, deterioration of liquid crystal molecules is prevented.

For the LCD device operated in the inversion method, when a static image is scrolled, an after-image may occur along a moving path. This is referred to as a scroll after-image.

FIG. 3 is a view illustrating a scroll after-image in the LCD device according to the related art.

Referring to FIG. 3, when a static image shown with a solid line moves right to left in a liquid crystal screen 50, a scroll after-image shown with a dashed line appears along a moving path according to the scroll. This problem is caused by a DC voltage accumulation in the pixels along the moving path. In other words, the pixel on the moving path is repeatedly supplied with data voltages having the same polarity, and thus a DC voltage of such the polarity is accumulated in the pixel.

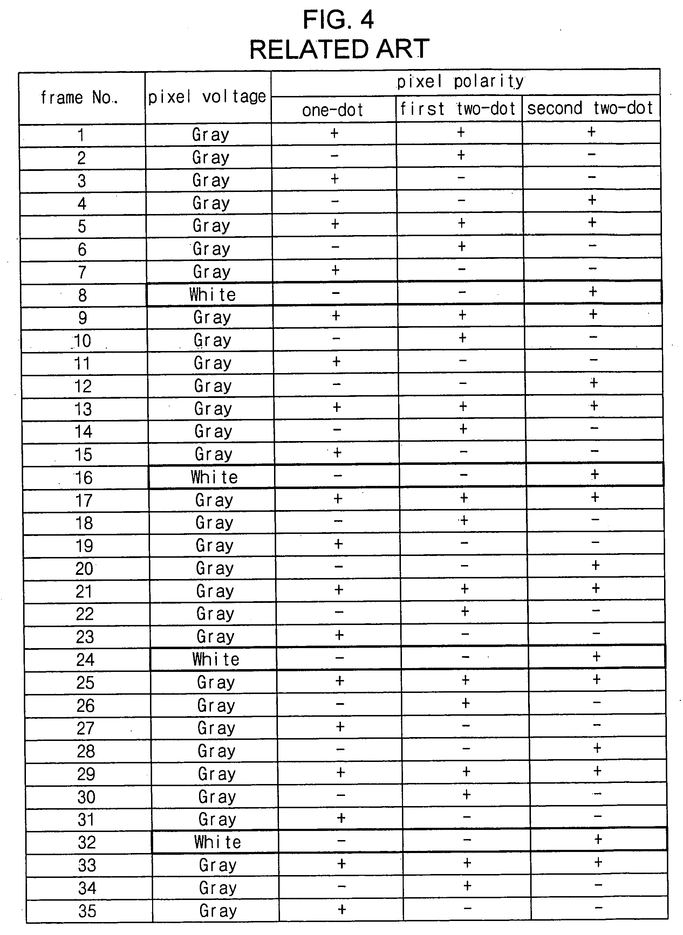

FIG. 4 is a table of data voltage polarities causing a DC voltage accumulation when a static image is scrolled with a predetermined scroll pattern in an LCD device according to the related art.

Referring to FIG. 4, a static image is white, and a background of the static image is gray. The predetermined is that when the static image is scrolled, the static image moves in a speed of N pixel/frame, for example, 8 pixel/frame and a white data voltage is inputted to a pixel, which is located on a moving path, every M frames according to the speed, for example, 8 frames.

In the related art, each pixel has positive and negative polarities alternately every frame according to a one-dot inversion method. Each pixel has positive and negative polarities alternately every two frames according to a first two-dot inversion method and a second two-dot inversion method.

Accordingly, when the scroll operation is conducted with the above inversion methods, the white data voltages having the same polarity, for example, a negative (+) polarity continue to be inputted to the pixel every 8 frames. In other words, this input of the white data voltages having the same polarity with a specific number of frames occurs commonly in the one-dot inversion method and the first and second two-dot inversion methods. Accordingly, a DC component of the same polarity is gradually accumulated in the pixel as the scroll operation continues, and this causes an after-image due to the scroll operation. In particular, as the speed gets lower, the static image stays at the pixel for a longer time and input frequency of the white data voltage having the same polarity increases. Accordingly, the DC voltage accumulation increases, and thus the after-image appears more.

According to US 2005/0264508 A1, a liquid crystal display device can have enhanced display quality of a display screen by preventing the generation of lateral stripes on the display screen when the polarity of a gray scale voltage is inverted for every N (N.gtoreq.2) lines without providing a new display control signal.

In US 6,046,717, a liquid crystal apparatus comprises scanning electrodes and data electrodes intersecting with each other to form a pixel at each intersection, and a ferroelectric liquid crystal disposed between the scanning electrodes and data electrodes.

### SUMMARY

Accordingly, the present invention is directed to a method of driving a liquid crystal display device that substantially obviates one or more of the problems due to limitations and disadvantages of the related art.

An advantage of the present invention is to provide a method of driving a liquid crystal display device that can improve display quality.

Additional features and advantages of the present invention will be set forth in the description which follows, and in part will be apparent from the description, or may be learned by practice of the invention. These and other advantages of the invention will be realized and attained by the structure particularly pointed out in the written description and claims hereof as well as the appended drawings.

The object and advantages of the present invention are achieved by subject matters of the independent claims.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram of a LCD device according to the related art;
FIG. 2 is a circuit diagram of a liquid crystal panel of FIG. 1;
FIG. 3 is a view illustrating a scroll after-image in the LCD device according to the related art;
FIG. 4 is a table of data voltages causing a DC voltage accumulation when a static image is scrolled with a predetermined scroll pattern in an LCD device according to the related art;
FIG. 5 is a table of data voltages when a static image is scrolled with a predetermined scroll pattern in an LCD device according to an embodiment of the present invention; and
FIGs. 6A and 6B are flow charts illustrating a method of driving an LCD device according to the embodiment of the present invention.

### DETAILED DESCRIPTION

Reference will now be made in detail to illustrated embodiments of the present invention, which are illustrated in the accompanying drawings.

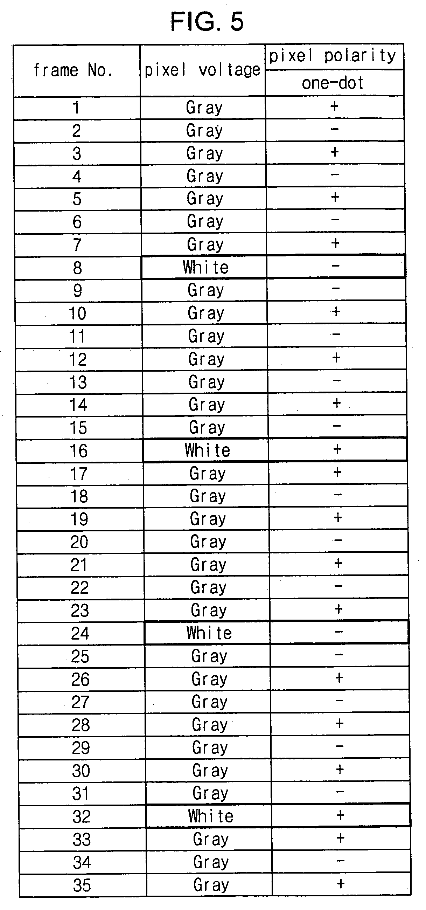

FIG. 5 is a table of data voltages when a static image is scrolled with a predetermined scroll pattern in an LCD device according to an embodiment of the present invention.

An LCD device according to the embodiment of the present invention is similar to the LCD device of FIGs. 1 and 2. Accordingly, explanations of parts similar to parts of FIGs. 1 and 2 will be omitted for brevity's sake.

Referring to FIG. 5, a static image is white, and a background of the static image is gray. The predetermined scroll pattern is that when the static image is scrolled, the static image moves in a speed of M pixel/frame, for example, 8 pixel/frame and a white data voltage is inputted to a pixel, which is located on a moving path, every N frames according to the speed, for example, 8 frames.

During a non-scroll operation, an inversion method, such as a one-dot inversion method and first and second two-dot inversion methods, is conducted in all frames of the non-scroll operation. During a scroll operation, all frames of the scroll operation may be divided in a plurality of time sections, and the inversion method may be conducted in each time section. The time section may be an input period of the white data voltage i.e., N frames. For example, when N is even, an inversion method in a time section may be opposite to an inversion method in a next time section, and thus polarity patterns of the pixel between adjacent time sections may be opposite. In other words, the pixel may have positive and negative polarities according to the inversion method in each time section, and the polarity patterns of data voltages may be opposite every time section. For example, when N is 8 and a one-dot inversion method is conducted, the LCD device is operated in the one-dot inversion method in each time section of 8 frames, and the polarity patterns of the data voltages are opposite every time section. Accordingly, the white data voltages having the opposite polarities are alternately inputted to the pixel every 8 frames. In other words, the white data voltages having a negative polarity are inputted at 8^{th}, 24^{th}, ... frames, and the white data voltages having a positive polarity are inputted at 16^{th}, 32^{nd}, ... frames. Accordingly, a DC component of the same polarity is not be accumulated in the pixel even as the predetermined scroll pattern continues, and thus an after-image due to the scroll operation can be prevented.

When N is odd, the LCD device may continue to be operated in the inversion method of the non-scroll operation without a change to the one-dot inversion method depending upon the time section.

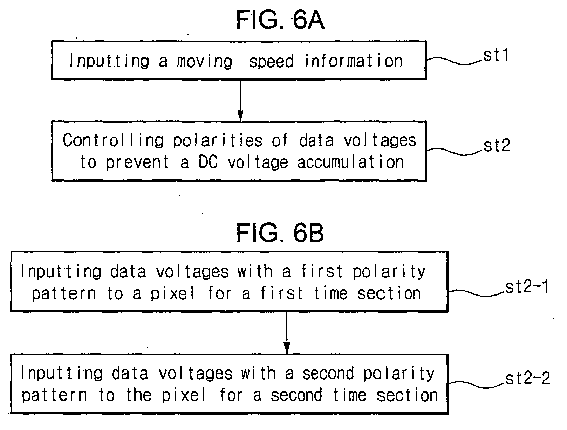

FIGs. 6A and 6B are flow charts illustrating a method of driving an LCD device according to the embodiment of the present invention.

Referring to FIG. 6A, in order that a scroll operation of a static image, for example, a white static image, is conducted in the LCD device of the embodiment, the LCD device is supplied with an information associated with a moving speed (pixel/frame) of the static image from an external system, for example, a computer or TV system (st1). The moving speed may be even.

The information associated with moving speed may be inputted to a timing controller. The timing controller may change an inversion method to control polarities of data voltages to prevent a DC voltage accumulation (st2).

In more detail, referring to FIG. 6B, the timing controller may set an input period of a white data voltage based on the moving speed. For example, the input period is N frames. The timing controller may change an inversion method of the LCD device according to the input period. For example, when an inversion method is operated before the scroll operation and N is even, the inversion method may be conducted separately in each time section. The time section may be the input period. For a first time section of 1 to N^{th} frames, data voltages with a first polarity pattern are inputted to a pixel on a moving path of a static image (st2-1). For a second time section of (N+1)^{th} + 2N^{th} frames, data voltages with a second polarity pattern which is opposite to the first polarity pattern (st2-2) are inputted to the pixel. For example, referring to FIG. 5 where N is 8 and a one-dot inversion method is conducted, positive (+) and negative (-) polarities are alternately inputted to the pixel for 1^{st} to 8^{th} frames, and negative (-) and positive (+) polarities are alternately inputted to the pixel for 9^{th} to 16^{th} frames. Accordingly, white data voltages having opposite polarities are alternately supplied to the pixel every N frames, and thus an after-image can be prevented.

As described above, in the embodiment, the data voltages displaying the static image do not have the same polarity but have opposite polarities during the scroll operation. Therefore, a DC voltage is not accumulated in the pixel on the moving path of the static image, and an after-image can be prevented.

The embodiment can be applicable to other inversion methods.

It will be apparent to those skilled in the art that various modifications and variations can be made in the present invention. Thus, it is intended that the present invention cover the modifications and variations of this invention provided they come within the scope of the appended claims.

## Claims

1. A method of driving a liquid crystal display device, comprising:
conducting one of a one-dot inversion, a first two-dot inversion or a second two- dot inversion method in all frames during a non scroll operation,
during a scroll operation, wherein a static image is scrolled in a speed of M pixels per frame causing a first data voltage to be inputted to a pixel, which is located on a moving path, every N frames according to the speed, and a second data voltage to be inputted to the pixel during remaining frames,dividing all frames of the scroll operation in a plurality of time sections of N frames, and when N is even, conduct one of the one-dot inversion, first two-dot inversion or second two-dot inversion method in each frame, wherein polarity patterns of data voltages supplied to a pixel on a moving path is opposite between adjacent time sections during the scroll operation; and
during scroll operation and when N is odd conduct inversion with the inversion method of the non scroll operation.

## Patentansprüche

1. Verfahren zum Ansteuern einer Flüssigklistallanzeigevorrichtung, wobei das Verfahren die folgenden Schritte umfasst:
Ausführen eines Ein-Punkt-Inversions-, eines ersten Zwei-Punkt-Inversions- oder eines zweiten Zwei-Punkt-Inversionsverfahrens in allen Rahmen während eines Vorgangs ohne Bild-Scrollen,
während eines Bild-Scrollvorgangs, bei dem ein statisches Bild mit einer Geschwindigkeit von M Bildpunkten pro Rahmen gescrollt wird, wodurch bewirkt wird, dass in Übereinstimmung mit der Geschwindigkeit nach jeweils N Rahmen eine erste Datenspannung an einen Bildpunkt, der sich auf einem Bewegungspfad befindet, angelegt wird, und dass während verbleibender Rahmen an den Bildpunkt eine zweite Datenspannung angelegt wird, Unterteilen aller Rahmen des Bild-Scrollvorgangs in mehrere Zeitabschnitte aus N Rahmen, und wenn N gerade ist, Ausführen eines Ein-Punkt-Inversions-, eines ersten Zwei-Punkt-Inversions- oder eines zweiten Zwei-Punkt-Inversionsverfahrens in jedem Rahmen, wobei Polaritätsmuster von Datenspannungen, die an einen Bildpunkt auf einem Bewegungspfad angelegt werden, zwischen benachbarten Zeitabschnitten während des Bilddurchlaufvorgangs entgegengesetzt sind; und
während eines Bild-Scrollvorgangs und wenn N ungerade ist, Ausführen einer Inversion mit dem Inversionsverfahren des Vorgangs ohne Bild-Scrollen.

## Revendications

1. Procédé de commande d'un dispositif d'affichage à cristaux liquides, comprenant :
l'exécution de l'un d'un procédé d'inversion d'un point, d'un procédé d'inversion des deux premiers points et d'un procédé d'inversion des deux deuxièmes points dans toutes les trames au cours d'une opération de non-défilement,
au cours d'une opération de défilement, dans laquelle une image statique est défilée à une vitesse de M pixels par trame amenant une première tension de données à être entrée dans un pixel, qui est situé sur un chemin de déplacement, toutes les N trames en fonction de la vitesse, et une deuxième tension de données à être entrée dans le pixel pour les trames restantes, la division de toutes les trames de l'opération de défilement en une pluralité de sections de temps de N trames, et lorsque N est pair, l'exécution de l'un du procédé d'inversion d'un point, du procédé d'inversion des deux premiers points et du procédé d'inversion des deux deuxièmes points dans chaque trame, dans lequel des motifs de polarité de tensions de données fournies à un pixel sur un chemin de déplacement sont opposés entre des sections de temps adjacentes au cours de l'opération de défilement ; et
au cours de l'opération de défilement et lorsque N est impair, l'exécution de l'inversion avec le procédé d'inversion de l'opération de non-défilement.
